Europäisches Patentamt

European Patent Office

Office européen des brevets

(11) Numéro de publication: **0 503 986 B1**

## (12) FASCICULE DE BREVET EUROPEEN

(45) Date de publication de fascicule du brevet: **04.01.95** (51) Int. Cl.⁶: **G01L 1/24**

(21) Numéro de dépôt: **92400299.1**

(22) Date de dépôt: **05.02.92**

(54) **Dispositif de mesure de force et appareillage pour capter le courant d'une ligne caténaire utilisant ce dispositif.**

(30) Priorité: **15.03.91 FR 9103209**

(43) Date de publication de la demande:
**16.09.92 Bulletin 92/38**

(45) Mention de la délivrance du brevet:
**04.01.95 Bulletin 95/01**

(84) Etats contractants désignés:
**BE DE ES FR GB IT NL**

(56) Documents cités:
**EP-A- 0 363 623**

(73) Titulaire: **FAIVELEY TRANSPORT**
**143 Boulevard Anatole France,**
**Carrefour Pleyel**
**F-93200 Saint-Denis (FR)**

(72) Inventeur: **Harmer, Alan**
**74 Mère voie**
**CH-1228 Plan les Ouates,**
**Geneve (CH)**
Inventeur: **Cathala, Jacques**
**Les Vallées**
**F-37150 Ballan-Mire (FR)**
Inventeur: **Forte, Pascal**
**8 Place François Rude**
**F-37200 Tours (FR)**

(74) Mandataire: **Keib, Gérard et al**
**Bouju Derambure (Bugnion) S.A.,**
**52 rue de Monceau**
**F-75008 Paris (FR)**

## Description

La présente invention concerne un dispositif pour mesurer une force ainsi qu'un appareillage pour capter le courant électrique d'une ligne caténaire depuis une motrice utilisant ce dispositif.

Le dispositif de mesure de l'invention comporte plusieurs capteurs de force à fibre optique dans lesquels au moins un tronçon de sollicitation d'une fibre optique est disposé dans une zone de transmission d'effort adaptée pour exercer une contrainte sur la fibre en réponse à l'application de la force à mesurer.

L'état de la technique dans le domaine des capteurs de force à fibre optique est décrit dans la partie introductive de la demande de brevet français intitulée "Capteur de force et appareillage pour capter le courant d'une ligne caténaire depuis une motrice utilisant ce capteur" et déposée au nom de la demanderesse le même jour que la présente demande (EP-A-395 504).

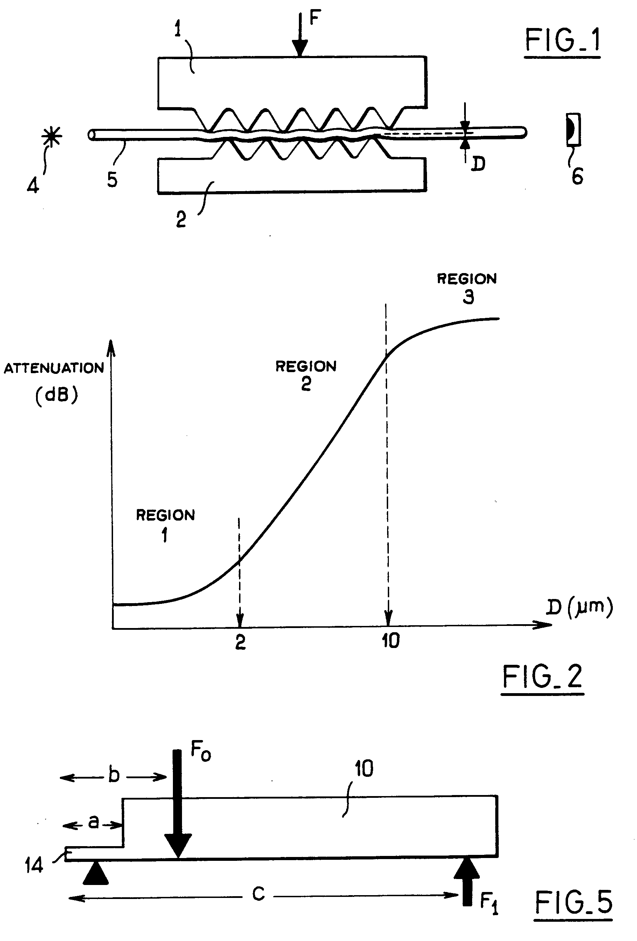

Dans l'exemple d'un capteur par microcourbures illustré schématiquement à la figure 1, le tronçon de sollicitation de la fibre optique 5 est inséré entre deux mâchoires 1, 2 qui appliquent à la fibre 5 une déviation par microcourbures d'amplitude D en réponse à l'application de la force F. Un photodétecteur 6 mesure l'intensité lumineuse issue d'une source 4 et transmise le long de la fibre 5. L'atténuation lumineuse en fonction du déplacement D suit typiquement une courbe en S telle que représentée à la figure 2. Seule la région centrale 2 de la courbe correspond à un régime de réponse linéaire.

Jusqu'à présent, peu de montages optiques ont été proposés pour associer de tels capteurs, principalement parce que cette association suppose généralement que les différents capteurs aient une réponse (atténuation) proportionnelle à la force appliquée, avec un coefficient de proportionnalité reproductible avec précision. Cette reproductibilité était jusqu'à présent difficile à réaliser en raison des très grandes précisions d'usinage requises pour construire les capteurs et du fait que ces capteurs présentent, au cours du temps, une dérive de leur réponse due notamment au vieillissement des pièces mécaniques et au tassement de la gaine de la fibre optique.

La méthode de OTDR (Optical Time Domain Reflectometry), par réflection d'une impulsion de lumière, a été développée pour interroger plusieurs capteurs disposés sur une seule fibre optique. Le GB-A-2 015 844 décrit un câble à fibre optique avec une structure de microcourbures disposé le long d'une voie ferrée pour détecter la présence d'un train par la méthode OTDR. Une deuxième série de brevets US-A-4 463 254, US-A-4 421 970, US-A-4 459 477, US-A-4 477 725) décrit une manière de monter une chaîne de capteurs par microcourbures sur une fibre optique pour mesurer les contraintes dans une construction mécanique, telle qu'un bâtiment.

Une chaîne de capteurs sur une seule fibre peut être interrogée par cette méthode. Effectivement, l'impulsion de lumière émise parvient successivement à chaque capteur. Mais les signaux de chaque capteur ne sont pas intégrés par cette méthode. De plus, il se produit une perturbation du signal issu de chaque capteur par les autres capteurs, qui limite le système de mesure à de faibles valeurs d'atténuation (voir A.R. Mickelson, O. Klevhus and M. Eriksrud, 1984 ; Backscatter readout from serial microbending sensors, Journal of Lightwave Technology, volume LT-2, pages 700 à 709 ; et D.C. Marvin and N.A. Ives, 1984 : Wide-range fibre-optic strain sensor, Journal of Applied Optics, volume 23, pages 4212 à 4217).

Le but de la présente invention est de proposer un nouveau dispositif de mesure de forme permettant d'interroger simultanément plusieurs capteurs à fibre optique pour délivrer une information qui intègre les efforts mesurés par chaque capteur et qui puisse être exploitée de façon simple.

L'invention vise ainsi un dispositif pour mesurer une force comprenant un circuit optique établi entre plusieurs capteurs de force à fibre optique, au moins une source de lumière et au moins un détecteur de lumière.

Suivant l'invention, ce dispositif est caractérisé en ce que chaque détecteur de lumière disposé pour détecter de la lumière émise par une source de lumière et transmise le long du circuit optique, en ce que chacun des capteurs de force est sensible à une fraction de la force à mesurer et comporte une zone de transmission d'effort adaptée pour exercer une contrainte sur un tronçon de sollicitation d'une fibre optique du circuit en réponse à l'application de ladite fraction de la force à mesurer et en ce que le circuit optique est agencé pour que la lumière transmise et détectée fournisse une information représentative de la somme des fractions de la force à mesurer relatives aux capteurs.

Avec ce montage, la mesure est effectuée par transmission de la lumière le long des fibres optiques du circuit, ce qui écarte les difficultés rencontrées dans les méthodes par réflexion (OTDR). Comme l'intégration des signaux de mesure est effectuée optiquement par l'intermédiaire des fibres du circuit, on obtient directement des informations globales, ce qui simplifie leur traitement ultérieur.

Dans une version préférée de l'invention, le circuit optique comprend au moins une fibre optique de détection sur laquelle plusieurs capteurs sont montés en série.

Le circuit optique a alors une structure particulièrement simple, avec un nombre de composants optiques (fibres, connecteurs, ...) réduit, ce qui minimise les pertes par atténuation dans ces composants et permet de réaliser le dispositif avec un coût de fabrication faible. Pour améliorer les performances du montage, on peut adjoindre à la fibre optique de détection une fibre optique de référence ayant sensiblement la même constitution, en la faisant passer hors des zones de transmission d'effort des capteurs. Ceci permet de tenir compte des sources d'atténuation du circuit optique autres que les capteurs.

Dans une autre forme de réalisation avantageuse de l'invention, le circuit optique comprend une première et une seconde fibres optiques de détection sur lesquelles sont montés des capteurs de force et une première et une seconde fibres optiques de référence disposées hors des zones de transmission d'effort des capteurs, les fibres optiques de détection et de référence ayant sensiblement la même constitution et les mêmes dimensions, et le circuit optique est agencé pour que :

- la première fibre optique de détection et la première fibre optique de référence reçoivent des impulsions lumineuses émises par une première source de lumière à une première fréquence ;
- la seconde fibre optique de détection et la seconde fibre optique de référence reçoivent des impulsions lumineuses émises par une seconde source de lumière à une seconde fréquence distincte de la première fréquence ;
- un premier détecteur de lumière reçoive les impulsions lumineuses transmises par la première fibre optique de détection et par la seconde fibre optique de référence ; et
- un second détecteur de lumière reçoive les impulsions lumineuses transmises par la seconde fibre optique de détection et par la première fibre optique de référence.

Ce montage permet, en analysant les signaux reçus par les détecteurs suivant les deux fréquences d'émission, de calculer la somme des fractions d'effort relatives à chaque capteur en éliminant l'effet des sources d'atténuation indésirable telles que les fibres optiques servant à acheminer les signaux de mesure.

Un autre aspect de l'invention concerne un appareillage pour capter le courant électrique d'une ligne caténaire depuis une motrice, comprenant une structure tubulaire déployable, un archet disposé à la partie supérieure de la structure tubulaire et supportant au moins une bande de frottement, des moyens pour appliquer l'archet contre la ligne caténaire et au moins un dispositif de mesure tel que défini ci-dessus caractérisé en ce que des capteurs de force à fibre optique sont montés entre une bande de frottement et l'archet de façon à être sensibles chacun à une fraction de la force de contact entre la bande de frottement et la ligne caténaire, les capteurs étant reliés à au moins une source de lumière et à au moins un détecteur de lumière, par l'intermédiaire d'un circuit optique, chaque détecteur de lumière (274, 276) étant disposé pour détecter de la lumière émise par une source de lumière (272) et transmise le long du circuit optique, et en ce que le circuit optique est agencé pour que la lumière transmise et détectée fournisse une information représentative de la somme des fractions de la force de contact relatives aux capteurs.

Ce montage permet, en interprétant les signaux de mesure, d'effectuer un asservissement rétroactif de l'effort de contact entre les bandes de frottement et la ligne caténaire sur la base de signaux de mesure d'effort précis et fiables.

D'autres particularités et avantages de la présente invention apparaîtront dans la description détaillée ci-dessous, lue conjointement aux dessins annexés, dans lesquels:

- la figure 1, précédemment discutée, représente schématiquement un capteur de force à fibre optique par microcourbures;
- la figure 2, précédemment discutée, est un graphique illustrant la réponse du capteur de la figure 1;
- la figure 3 est une vue éclatée en perspective d'un capteur utilisé dans l'invention;
- la figure 4 est une vue en perspective du capteur de la figure 3 après assemblage;
- la figure 5 est un schéma utile pour expliquer le fonctionnement du capteur des figures 3 et 4;
- la figure 6 illustre schématiquement un second mode de réalisation d'un capteur utilisable dans l'invention;
- les figures 7 et 8 sont des vues en coupe d'une fibre optique dans le mode de réalisation de la figure 6 ;
- la figure 9 représente un circuit optique utilisable dans l'invention ;
- la figure 10 illustre un détail de la figure 9 ;
- la figure 11 représente schématiquement un autre circuit optique utilisable dans l'invention ;
- la figure 12 illustre un montage de fibres optiques pour mesurer l'effort de contact entre un pantographe et une ligne caténaire;
- la figure 13 est une vue en élévation de la partie supérieure d'un pantographe suivant l'invention;
- la figure 14 est une vue de dessus partielle du pantographe de la figure 13;
- la figure 15 est une vue suivant le plan X-X de la figure 14;

- la figure 16 représente une vue en plan avec arrachement partiel d'une partie du pantographe de la figure 13 ;
- la figure 17 est une vue en coupe suivant le plan Y-Y de la figure 16 ; et
- la figure 18 est une vue analogue à celle de la figure 17 dans une variante de réalisation du pantographe.

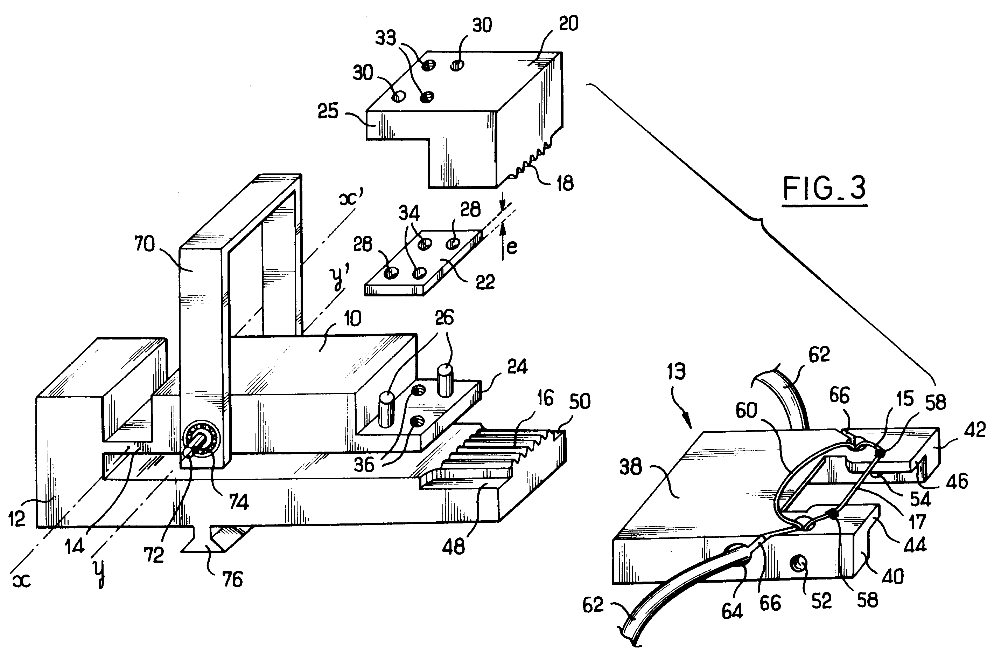

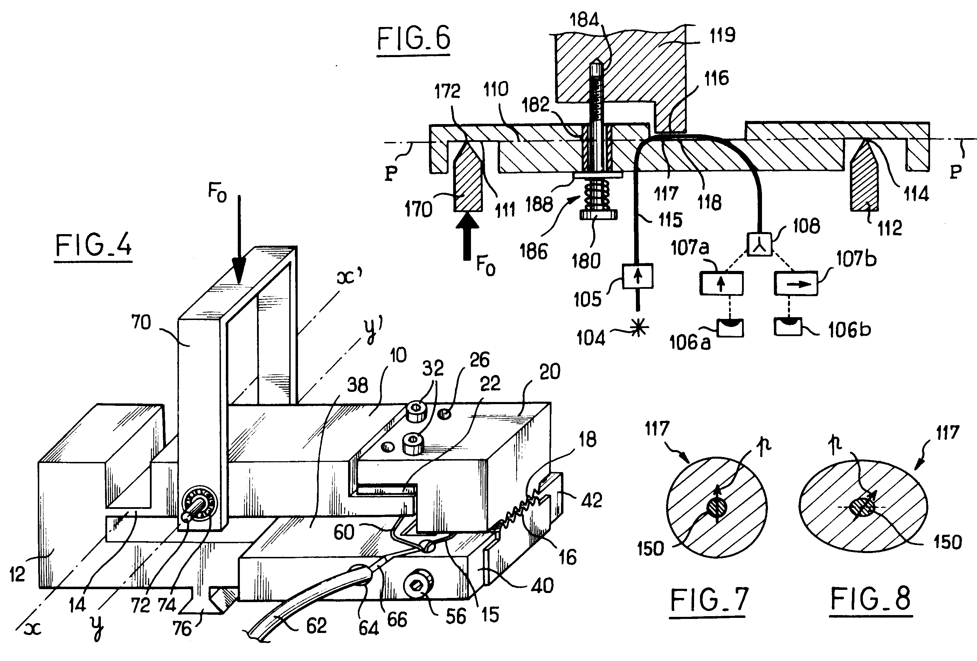

Dans la description ci-dessous, on désignera par "capteur" une structure telle que celle représentée aux figures 3 et 4, permettant de modifier les caractéristiques de la lumière se propageant dans la fibre optique en réponse à l'application d'une force et donc de générer une modulation d'un signal optique représentative de cette force. On désignera par "dispositif de mesure", un système composé notamment d'une ou plusieurs fibres optiques de détection et d'un ou plusieurs capteurs tels que définis ci-dessus.

En référence aux figures 3 et 4, un capteur par microcourbures d'un dispositif suivant l'invention comprend un bras 10 articulé sur un support 12 autour d'un axe de pivotement x-x′ défini par une lame 14 reliant le bras 10 au support 12. La partie inférieure du support 12 s'étend parallèlement au bras 10 et son extrémité opposée à la lame d'articulation 14 comporte une première surface de pincement 16 faisant face à une seconde surface de pincement 18 solidaire du bras 10 (voir figure 4). Lorsque le capteur est assemblé (figure 4), un tronçon de sollicitation 17 d'une fibre optique de détection 15 portée par un organe porte-fibre 13 est disposé dans la zone de transmission d'effort définie entre les surfaces de pincement 16, 18 et s'étend dans une direction parallèle à l'axe de pivotement x-x′ du bras 10. Une extrémité de la fibre optique de détection 15 comporte des moyens de raccordement à une source de lumière (diode électroluminescente ou diode laser) et l'autre extrémité comporte des moyens de raccordement à un photodétecteur.

Les deux surfaces de pincement 16, 18 présentent chacune une modulation sous forme d'une succession de nervures qui, dans l'exemple représenté, sont parallèles à la direction du bras 10, c'est-à-dire perpendiculaires au tronçon de sollicitation 17 de la fibre de détection 15. Les nervures sont séparées les unes des autres par un écart constant déterminé en fonction des propriétés de propagation lumineuse dans la fibre optique utilisée (voir US-A-4 572 950). Les nervures respectives des surfaces de pincement 16, 18 sont décalées les unes par rapport aux autres, le long du tronçon de sollicitation 17 de la fibre optique de détection 15 lorsque celle-ci est mise en place de sorte que les surfaces de pincement 16, 18 provoquent des microcourbures du tronçon de sollicitation 17 de la fibre 15 en réponse à un effort de pincement transversal (voir figure 1).

La seconde surface de pincement 18 fait partie d'un bloc 20 constituant l'extrémité du bras 10 opposée à la lame d'articulation 14. Ce bloc 20 est monté sur le corps du bras 10 avec interposition d'une cale 22 dont l'épaisseur $e$ est déterminée comme on le verra plus loin. Le corps du bras 10 se termine par une partie en saillie 24 en forme de plaquette parallèle à la lame 14. Le bloc d'extrémité 20 est fixé sur cette plaquette 24 par un prolongement 25 qui repose sur la plaquette 24 avec interposition de la cale 22. Le positionnement de la cale 22 et du bloc 20 sur le corps du bras 10 est assuré par deux goupilles cylindriques 26 portées par la plaquette 24 et traversant des trous complémentaires 28, 30 prévus respectivement dans la cale 22 et dans le prolongement 25 du bloc 20. Le bloc 20 est rendu solidaire du corps du bras 10 par deux vis 32 montées au-dessus du bloc 20, traversant des trous 33, 34 prévus respectivement dans le prolongement 25 du bloc 20 et dans la cale 22, et venant en prise dans des trous filetés 36 portés par la plaquette 24. La surface supérieure de la plaquette 24, la cale 22 et la surface inférieure du prolongement 25 du bloc 20 sont parallèles à la seconde surface de pincement 18 portée par le bloc 20 de sorte qu'en modifiant. l'épaisseur $e$ de la cale 22, on fait varier l'écart séparant les surfaces de pincement 16, 18 qui restent. parallèles entre elles.

Le corps du bras 10, la lame 14 et le support 12 sont réalisés en un seul bloc, par exemple en matériau métallique. La lame 14 fournissant l'axe de pivotement x-x′ du bras 10 assure en outre une fonction élastique de précontrainte du tronçon de sollicitation 17 de la fibre optique de détection 15. Un effort élastique dépendant de la raideur de la lame 14, s'applique sur le tronçon de sollicitation 17 de la fibre optique de détection 15 par compression entre les surfaces de pincement 16, 18. Cet effort de précontrainte peut en outre être réglé à une valeur désirée en modifiant l'épaisseur $e$ de la cale 22, qui met en tension le ressort constitué par la lame 14, l'effort de précontrainte variant linéairement en fonction de cette épaisseur $e$. Cet effort de précontrainte, appliqué indépendamment de la force $F_0$ à mesurer, permet de faire fonctionner le capteur dans sa région de fonctionnement linéaire (voir figure 2).

La fibre optique de détection 17 est supportée par un organe porte-fibre 13 qui est posé sur la partie inférieure du support 12. L'organe porte-fibre 13 comprend ainsi une zone centrale 38 formant surface d'appui qui se place sur la surface supérieure de la partie inférieure du support 12, et deux flancs 40, 42 parallèles dont l'écartement correspond à la largeur du support 12. La longueur des flancs 40, 42 de l'organe porte-fibre 13 est supérieure à celle de la zone d'appui 38 de sorte que les extrémités des flancs 40, 42 délimitent une partie ouverte qui, lorsque l'organe porte-fibre est monté sur le support 12, reçoit la surface de pincement 16 du support 12. Les extrémités des flancs 40, 42 comportent en outre des rebords 44, 46 en saillie vers l'intérieur et dont la surface inférieure coopère avec un épaulement respectif 48, 50, ces épaulements 48, 50 étant ménagés, sur le support 12, de part et d'autre de la surface de pincement 16. L'organe porte-fibre 13 peut ainsi coulisser le long du support 12 avec ses flancs 40, 42 coopérant avec les côtés du support 12 pour maintenir l'orientation du tronçon de sollicitation 17 de la fibre 15. Les flancs 40, 42 de l'organe porte-fibre 13 comportent chacun un orifice fileté 52, 54 destiné à recevoir des vis 56 qui solidarisent l'organe porte-fibre 13 et le support 12 portant la surface de pincement 16 lorsque le capteur est assemblé (figure 4).

L'organe porte-fibre 13 supporte la fibre optique de détection 15 dont un tronçon de sollicitation 17 est disposé perpendiculairement aux flancs 40, 42, c'est-à-dire, lorsque le capteur est assemblé (figure 4) dans une direction parallèle à l'axe de pivotement x-x' du bras 10. Pour positionner la fibre optique de détection 15 avec son tronçon de sollicitation 17 convenablement orienté, on peut prévoir par exemple de la fixer à la partie supérieure de l'organe porte-fibre 13 par des points de colle 58 situés sur les rebords 44, 46 qui bordent la surface de pincement 16

A la figure 3, on voit que l'organe porte-fibre 13 supporte en outre une seconde fibre optique 60, dite fibre optique de référence. La fibre optique de référence 60 a avantageusement une constitution et des dimensions identiques à celles de la fibre optique de détection 15. La fibre optique de référence 60 est disposée sur l'organe porte-fibre 13 (par exemple par collage) de façon à ne pas être insérée entre les surfaces de pincement 16, 18, lorsque le capteur est assemblé.

Les fibres optiques de détection 15 et de référence 60 sont réunies en un câble unique 62 à l'intérieur d'une gaine commune. Pour monter les fibres optiques 15, 60 sur l'organe porte-fibre 13, on interrompt la gaine du câble 62 sur la longueur nécessaire, et on introduit le câble 62, près des parties interrompues de sa gaine dans des trous 64 portés respectivement par chaque flanc 40, 42 de l'organe porte-fibre 13. Une fente appropriée 66 permet de faire passer les zones libres des fibres optiques 15, 60 vers la partie supérieure de l'organe porte-fibre 13. On peut alors coller ces parties libres des fibres optiques 15, 60 sur la surface supérieure de l'organe porte-fibre 13, en faisant passer le tronçon de sollicitation 17 de la fibre optique de détection 15 entre les rebords 44, 46 de sorte que ce tronçon soit inséré entre les surfaces de pincement 16, 18, et en faisant passer la zone correspondante de la fibre optique de référence 60 en dehors de la région séparant les deux rebords 44, 46 de façon que cette zone soit située en dehors des surfaces de pincement 16, 18 lorsque le capteur est assemblé.

Dans la forme de réalisation de l'invention illustrée aux figures 3 et 4, la force à mesurer $F_0$ s'applique sur un étrier 70 articulé sur le bras 10 autour d'un axe y-y' défini par une tige 72 traversant le bras 10 dans une direction parallèle à l'axe de pivotement x-x' du bras 10 et au tronçon de sollicitation 17 de la fibre optique de détection 15. La tige d'articulation 72 est disposée en un endroit situé plus près de l'axe de pivotement x-x' du bras 10 que du tronçon de sollicitation 17 de la fibre optique de détection 15. Cette tige 72 recevant l'étrier 70 sur lequel s'applique la force $F_0$ est située dans le plan de la lame 14 et les surfaces de pincement 16, 18 sont situées sensiblement dans ce plan. Ainsi, la force mesurée sera toujours la composante $F_0$ perpendiculaire à ce plan.

L'étrier 70 est monté sur la tige d'articulation 72 avec des roulements à billes 74 de chaque côté du bras 10 pour assurer une libre rotation de l'étrier 70 autour de la tige 72.

Pour mettre en place le capteur, le support 12 comporte, à sa partie inférieure, une nervure 76 par exemple en forme de queue d'aronde, qui s'étend parallèlement à la tige 72 et, relativement à l'axe de pivotement x-x' du bras 10, au droit de la tige 72, de façon que la force de réaction s'exerçant sur le support pour équilibrer la force à mesurer $F_0$ s'exerce avec le même bras de levier que celle-ci relativement à l'axe de pivotement x-x' du bras 10, ce qui évite l'apparition de couples indésirables.

Pour faire fonctionner le capteur ci-dessus décrit, une source de lumière, raccordée par des moyens appropriés à une extrémité de chaque fibre optique 15, 60, émet un signal lumineux qui se propage le long des fibres optiques 15, 60. L'application de la force à mesurer $F_0$ entraîne une déformation du tronçon de sollicitation de la fibre optique 15 par microcourbures, ce qui provoque une atténuation du signal lumineux dans la fibre optique de détection 15. Un détecteur de lumière respectif est raccordé à l'autre extrémité de chaque fibre optique 15, 60. Et, en comparant l'intensité lumineuse des signaux propagés le long des deux fibres optiques 15, 60, on obtient une information représentative de l'effort appliqué $F_0$.

Par une analyse dynamique des forces s'appliquant sur le bras 10, on peut montrer que la force de réaction $F_1$ exercée par la fibre optique 15 sur la surface de pincement 18 solidaire du bras 10, est sensiblement égale à l'effort mesuré $F_0$ multi-

plié par le coefficient (b-a/2)/(c-a/2), où (voir figure 5):

a représente la longueur de la lame élastique 14 mesurée le long du bras 10;

b représente la distance séparant le point d'application de la force à mesurer $F_0$ (c'est-à-dire la tige 72) et l'extrémité de la lame 14 adjacente au support 12; et

c représente la distance séparant le point d'application de la force de réaction $F_1$ de la fibre optique de détection 15 (c'est-à-dire le tronçon de sollicitation 17) et l'extrémité de la lame 14 adjacente au support 12.

La force de réaction $F_1$ est l'effort de compression appliqué au tronçon de sollicitation 17 de la fibre optique 15 par les surfaces de pincement 16, 18. Sachant que cette force $F_1$ ne doit pas être trop importante pour éviter d'endommager la fibre optique 15, et pour que le capteur fonctionne en régime linéaire, on peut choisir, lors de la construction du capteur, le rapport (b-a/2)/(c-a/2) de façon à régler la gamme de cette force $F_1$ en fonction de la gamme d'effort $F_0$ à mesurer. Ainsi, si les forces $F_0$ à mesurer sont relativement importantes, on effectuera une démultiplication comme illustré aux figures 3 à 5, en réglant le rapport (b-a/2)/(c-a/2), tandis que, si les forces $F_0$ à mesurer sont relativement faibles, on pourra au contraire effectuer une multiplication comme on le décrira plus loin en référence à la figure 6.

L'axe de pivotement x-x' du bras 10 est situé sensiblement au milieu de la longueur de la lame élastique 14, comme le montre la formule ci-dessus. Dans le dispositif suivant l'invention, on peut par ailleurs régler la sensibilité de la mesure en faisant varier le rapport des distances entre, d'une part, la distance c-a/2 séparant l'axe de pivotement x-x' du bras 10 et le tronçon de sollicitation 17 de la fibre optique de détection 15 et, d'autre part, la distance b-a/2 séparant l'axe de pivotement x-x' du bras 10 et la tige 72 où s'applique la force $F_0$ à mesurer. Pour cela, on peut faire coulisser l'organe porte-fibre 13 le long du support 12, ce qui rapproche ou éloigne le tronçon de sollicitation 17 de la fibre optique 15 de l'axe de pivotement x-x' et modifie donc le paramètre c. On fige alors ce réglage en serrant les vis 56 qui maintiennent l'organe porte-fibre 13 en position sur le support 12.

Par ailleurs, pour faire fonctionner le dispositif dans un régime de réponse linéaire (région 2 à la figure 2), on peut choisir une épaisseur $\underline{e}$ de la cale 22 variable, étant donné que, dans l'exemple représenté, plus cette épaisseur $\underline{e}$ est importante, plus l'effort de précontrainte exercé sur la fibre optique 15 pour décaler l'abscisse de l'origine des mesures est faible.

Le montage de l'étrier 70 d'application de la force à mesurer $F_0$ à l'aide de roulements à billes 74 disposés autour de la tige 72 permet, de façon avantageuse, d'obtenir une liberté de rotation de l'étrier 70 qui évite que des couples s'exerçant sur l'étrier 70 soient transmis au bras 10 lors de l'application de la force $F_0$. En outre, comme la tige 72 est située sensiblement dans le même plan que la lame 14, les surfaces de pincement 16, 18 étant situées sensiblement dans ce plan, la force $F_0$ mesurée sera toujours la composante perpendiculaire à ce plan.

Il est particulièrement avantageux, comme représenté aux figures 3 et 4, que le support 12, la lame 14 et au moins une partie du bras 10 forment un corps monobloc, par exemple réalisé à partir d'un bloc usiné, ce qui garantit une bonne stabilité mécanique du dispositif et une mesure sensiblement indépendante de la température de fonctionnement.

Pour une mesure par microcourbures, la fibre optique de détection 15 est de préférence une fibre optique multimode à gradient d'indice, ayant une gaine dure (une couche de 30 microns en aluminium ou une couche de 10 microns d'un plastique dur) pour éviter un fluage, et par conséquent une dérive du zéro de la mesure. Il est bien entendu possible de former plusieurs tronçons de sollicitation de la fibre optique de détection 15 s'étendant entre les surfaces de pincement 16, 18, en faisant passer plusieurs fois cette fibre optique de détection 15 entre les rebords 44, 46, cette disposition étant préférée lorsque le capteur travaille en régime linéaire car elle permet de répartir davantage les efforts ponctuels exercés sur la fibre optique de détection. On notera en outre que, bien que cela soit préféré, dans le cadre de la présente invention, le tronçon de sollicitation 17 de la fibre optique 15 n'est pas nécessairement parallèle à l'axe de pivotement x-x' du bras 10.

L'utilisation d'une fibre optique de référence 60 en parallèle à la fibre optique de détection 15, mais en dehors des surfaces de pincement 16, 18 permet, par comparaison des signaux lumineux relatifs aux deux fibres optiques 15, 60, de s'affranchir des sources d'atténuation de la propagation autres que le pincement de la fibre optique de détection 15 entre les surfaces de pincement 16, 18. Notamment, on peut ainsi supprimer l'effet de l'atténuation lumineuse venant par exemple de courbures de la fibre dans une zone distincte de la zone du capteur et également de supprimer les variations des signaux mesurés en fonction des températures rencontrées le long de la fibre. Une fibre optique de silice, constituant en elle-même un excellent ressort, avec un module d'Young élevé et une hystérésis faible, la contre-réaction $F_1$ par la fibre optique 15 sera très reproductible et le capteur délivrera donc des informations de mesure très fiables.

Avec ce dispositif selon l'invention, même si la gaine de la fibre optique de détection 15 subit un tassement au cours du temps, il ne se produit pas de dérive du zéro de la mesure, contrairement au cas d'un capteur de déplacement de la technique antérieure. En effet, la force à mesurer $F_0$ et l'effort de précontrainte sont transmis au tronçon de sollicitation 17 sous forme d'une force sans transformation de celle-ci en un déplacement, ce qui mettrait en jeu les dimensions précises et les propriétés élastiques des pièces mécaniques.

Exemple 1

Pour illustrer la forme de réalisation du capteur décrite en référence aux figures 3 et 4, on donne ci-dessous un exemple complet du dimensionnement d'un tel capteur, cet exemple n'étant bien entendu nullement limitatif quant à la portée de la présente invention.

1. Dynamique de mesure du capteur (recherchée) = 1 daN à 10 daN.

2. Fibre choisie:

Fabricant: Corning - Référence 201.

Fibre à gradient d'indice.

Diamètre du coeur = 85 microns, diamètre de la gaine = 125 microns.

Ouverture numérique = 0,26.

Gaine en acrylate.

Distance de couplage de modes : calculée = 1,557 mm (donnant, selon le US-A-4 572 950, la périodicité de la modulation des surfaces de pincement 16, 18).

Distance de couplage de modes mesurée = 1,58 mm

Sensibilité = 0,023 dB/g.

Gamme linéaire (avec 20 dents) = 100 à 900 g (Région 2 à la figure 2).

Raideur de la fibre (avec 20 dents) = 100 daN/mm.

3. Facteur de démultiplication (recherché)

$$F_0/F_1 = 10/0,9 = 11,1 = (c-a/2)/(b-a/2)$$

4. Construction du capteur :

Dimensions: a = 1 mm, b = 5 mm, c = 50 mm.

Point d'appui de la charge = 4,5 mm (du centre de la lame).

Facteur de démultiplication = 49,5/4,5 = 11.

Le porte-filtre 13 pouvait se déplacer de 5 mm le long du support 12. Ceci équivaut à modifier le facteur de multiplication de 10% et, donc, à faire varier la sensibilité de 10%.

5. Lame 14 :

Dimensions de la lame: Epaisseur = 0,8 mm; largeur = 20 mm.

Raideur de la lame = 6000 daN/mm.

Raideur de la lame vue du point d'application de la force = $6000/4,5^2$ = 296 daN/mm.

Il faut remarquer que la raideur de la lame 14 est grande, donc la fréquence de résonance mécanique du corps monobloc est élevée. Mais, vue du point d'application de la force $F_0$ appliquée au capteur, la raideur est faible et, donc, l'effort "absorbé" par la lame 14 est aussi faible (moins de 5% de l'effort total).

6. Cale 22:

Réglage de l'épaisseur de la cale 22 (déplacement du zéro) = 11/0,296 = 37,2 microns/kg (d'effort $F_0$)

7. Fréquence de résonance

Masse typique supportée par le capteur = 1 kg.

Fréquence de résonance:

Calculée = 721 Hz (flexion), 830 Hz (torsion).

Mesurée = 607 Hz, 924 Hz.

Bien entendu, de nombreuses variantes restant dans le cadre de l'invention peuvent être apportées au mode de réalisation décrit précédemment.

Une variante possible est illustrée à la figure 6. Dans cette variante, adaptée pour la mesure d'une force $F_0$ dans une gamme relativement basse, le bras 110 repose sur un support 112 par un appui de type couteau le long d'une arête 114 du support 112. La force $F_0$ à mesurer s'exerce sur un corps 170 qui s'appuie sur le bras 110 également par un appui de type couteau le long d'une arête 172 portée par le corps 170. Dans une zone médiane du bras 110, entre le corps 170 et le support 112, s'étend la fibre optique de détection 115 dont un tronçon de sollicitation 117 est inséré entre deux surfaces de pincement planes 116, 118. On assure ainsi une multiplication recherchée de l'effort $F_0$ pour appliquer un effort de pincement amplifié sur la fibre optique 115. Une surface de pincement 118 est solidaire du bras 110 et la seconde surface de pincement 116 est solidaire d'un bloc 119 distinct du bras 110 et disposé du côté opposé au support 112 et au corps 170 relativement au bras 110. Le bras 110 peut pivoter autour de l'arête 114 du support 112, et la sensibilité de ce capteur peut être réglée en modifiant les positions relatives du corps 170 et du support 112. L'arête 114 du support 112, l'arête 172 du corps 170 et la zone de transmission d'effort 116, 118 sont situées dans un même plan P. Pour appliquer l'effort de précontrainte, destiné au réglage du zéro de la mesure, sur la fibre optique de détection 115, on dispose une vis 180 traversant un trou 182 prévu dans le bras 110 perpendiculairement aux surfaces de pincement 116, 118 et venant en prise dans un trou fileté 184 prévu dans le bloc 119. La tête de la vis 180 s'applique à une extrémité d'un ressort hélicoïdal 186 entourant la tige de la vis 180, dont l'autre extrémité s'appuie sur une rondelle 188 disposée devant le trou 182 du bras 110, du côté de la tête de la vis 180. Le ressort 186 est disposé pour appliquer une contrainte de compression entre les surfaces de pincement 116 et 118, l'amplitude de cette précontrainte pouvant être réglée en serrant ou en desserrant la vis 180.

Dans l'exemple illustré à la figure 6, le circuit optique de détection est agencé pour une mesure par polarimétrie avec un seul capteur. Un filtre polarisant 105 est associé à la source de lumière 104 pour que la lumière émise dans la fibre 115 ait une polarité $p$ donnée. La fibre 115, dont le tronçon de sollicitation 117 est représenté en coupe à la figure 7, est une fibre monomode à coeur circulaire 150. Lorsqu'un effort de compression s'exerce entre les surfaces de pincement planes 116, 118, le tronçon de sollicitation 117 s'ovalise légèrement comme illustré (de façon exagérée) à la figure 8. Le coeur 150 de la fibre 115 s'aplatit légèrement et il en résulte une rotation de la polarisation $p$ de la lumière propagée. La mesure du degré de rotation de la polarisation $p$ donne donc une information représentative de l'effort mesuré par l'agencement de la figure 6. Pour effectuer cette mesure, l'extrémité de la fibre optique 115 se raccorde à l'entrée d'un coupleur en Y 108 dont les sorties sont reliées respectivement à un filtre polarisant 107a, 107b et à un photodétecteur 106a, 106b qui permettent d'analyser la polarisation de la lumière reçue. Le filtre 107a isole la composante parallèle à la polarisation initiale donnée par le filtre 105 et le filtre 107b isole la composante perpendiculaire à celle-ci et à la direction de propagation. La comparaison des signaux des détecteurs 106a, 106b indique donc le degré de rotation de la polarisation $p$, représentatif de la force $F_o$ mesurée par le capteur.

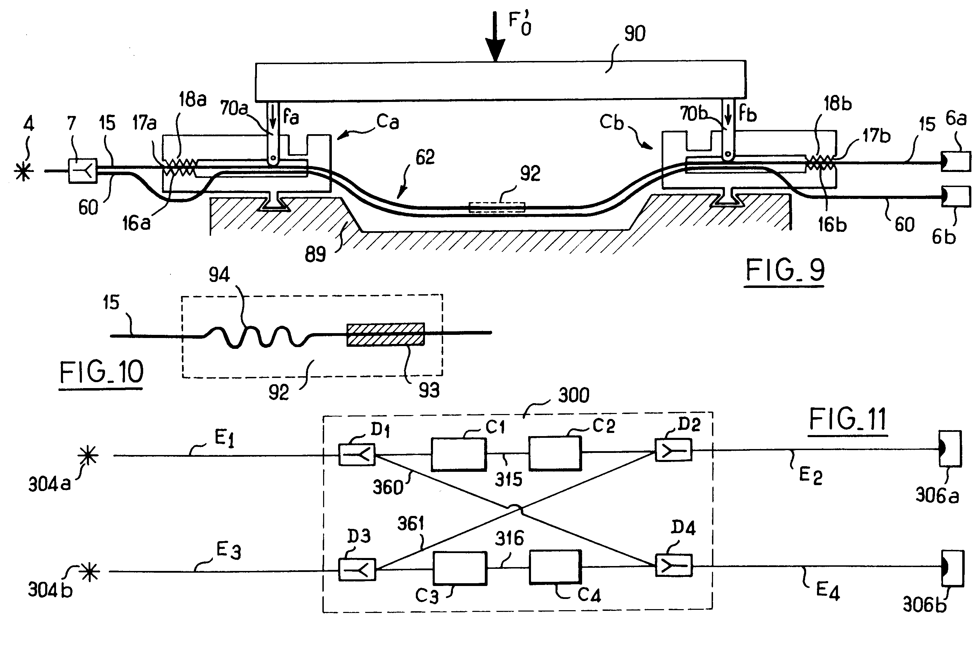

La figure 9 illustre un circuit optique utilisé selon la présente invention pour réaliser un dispositif de mesure comprenant plusieurs capteurs par microcourbures du type illustré aux figures 3 à 5. On notera qu'un circuit optique analogue peut être construit avec des capteurs par polarimétrie du type décrit en référence aux figures 6 à 8 ou avec d'autres capteurs à fibre optique.

Deux capteurs $C_a$, $C_b$ fixés sur un socle commun 89 sont montés en série sur la même fibre optique de détection 15. Deux tronçons de sollicitation 17a, 17b de la fibre 15 sont disposés dans les zones de transmission d'effort 16a, 18a, et 16b, 18b des capteurs $C_a$, $C_b$, qui exercent des contraintes sur ces tronçons de sollicitation 17a, 17b en réponse à l'application d'efforts respectifs $f_a$, $f_b$ sur les capteurs $C_a$, $C_b$ par l'intermédiaire de leurs étriers d'application de force 70a, 70b. Les efforts $f_a$, $f_b$ sont des fractions de la force totale à mesurer $F_o'$ qui s'exerce une barre de forme allongée 90 dont les extrémités sont fixées respectivement aux deux étriers 70a, 70b. La force $F_o'$ a son point d'application en une position indéterminée sur la barre 90, de sorte que les proportions de la force $F_o'$ qui correspondent aux fractions $f_a$, $f_b$ ne sont pas connues a priori.

La fibre optique de détection 15 est réunie avec une fibre optique de référence 60 en un câble 62, sauf au voisinage des zones de transmission d'effort 16a, 18a et 16b, 18b des capteurs $C_a$, $C_b$. A une de leurs extrémités, les fibres 15, 60 sont raccordées aux deux sorties d'un coupleur en Y 7 dont l'entrée est reliée à la source de lumière 4. L'autre extrémité de chacune des fibres 15, 60 se raccorde à un photodétecteur respectif 6a, 6b mesurant l'intensité lumineuse émise par la source 4 et transmise le long du circuit via les capteurs $C_a$, $C_b$.

Chacun des capteurs $C_a$, $C_b$ comporte des moyens de précontrainte réglable tels que ceux décrits en référence aux figures 3 et 4 de façon à les faire opérer dans leur région de fonctionnement linéaire et des moyens de réglage de sensibilité tels que ceux décrits en référence aux figures 3 et 4 de façon à ce qu'on puisse régler la sensibilité des capteurs $C_a$, $C_b$ sur une valeur sensiblement égale. Dans ces conditions, on obtient, en comparant les intensités mesurées par les capteurs $C_a$, $C_b$, une réponse sensiblement proportionnelle à l'effort total $F'_0 = f_a + f_b$.

Dans une réalisation simplifiée, il est possible de supprimer la fibre optique de référence 60. Dans ce cas, il est préférable de pouvoir évaluer les pertes par atténuation hors des zones de transmission d'effort 16a, 18a et 16b, 18b des capteurs $C_a$, $C_b$ de façon à en tenir compte dans l'analyse de l'atténuation totale.

Le montage illustré à la figure 9 effectue une intégration optique des fractions $f_a$, $f_b$ de la force $F_0'$ sans qu'il y ait besoin de mesurer ces fractions indépendamment l'une de l'autre. Le dispositif ne nécessite donc qu'un nombre réduit de composants optiques (fibres, connecteurs) ce qui réduit sensiblement son coût de fabrication. Le petit nombre de connecteurs minimise en outre les atténuations parasites qu'ils occasionnent.

EXEMPLE 2.

On a réalisé deux capteurs $C_a$, $C_b$ tels que celui décrit dans l'exemple 1 en réglant leur précontrainte pour qu'ils fonctionnent dans leur régime de réponse linéaire. On a réglé la sensibilité du capteur $C_a$ à une valeur de 1,35 décibel d'atténuation par kilogramme d'effort $f_a$ appliqué et celle du capteur $C_b$ à une valeur voisine de 1,45 décibel par kilogramme d'effort $f_b$, cette différence servant à démontrer que leur montage en série fournit des résultats satisfaisants même si les sensibilités ne sont pas strictement égales. Avec ces deux capteurs, on a réalisé un montage tel que celui de la figure 9, avec une barre 90 ayant une longueur de 612 mm. Les étriers 70a, 70b des capteurs $C_a$,$C_b$ étaient fixés aux deux extrémités de la barre 90 et le point d'application de la force $F_o'$ prenait différentes positions dans une zone de 400 mm de long autour du centre de la barre 90. La force $F_o'$ prenait différentes valeurs entre 2 et 10 kilogrammes. Les valeurs ci-dessus sont typiques d'une application du dispositif pour mesurer l'effort de contact $F_o'$ entre les bandes de frottement d'un pantographe pour motrice ferroviaire et une ligne caténaire. On a fait les observations suivantes :

(i) La sensibilité des deux capteurs en série est peu modifiée (1,28 dB/kg).

(ii) La linéarité de la réponse est améliorée. Les capteurs $C_a$, $C_b$ individuels présentent un écart de linéarité de 1,02 dB entre 2 et 10 kg d'effort tandis que leur association en série présente un écart de linéarité de 0,525 dB sur la même gamme.

(iii) L'atténuation globale dépend faiblement de la position du point d'application de la force $F_o'$ le long de la barre 90. Une certaine variation existe dans la zone de 400 mm spécifiée mais elle reste inférieure à 8% dans tous les cas de charge testés. Cette variation peut encore être réduite en égalisant les sensibilités individuelles des capteurs $C_a$, $C_b$ et en affinant le réglage des précontraintes.

(iv) Le montage en série n'augmente pas l'hystérésis du système (-0,15 dB à $F_o$ = 7 kg).

Pour améliorer les performances du dispositif, la fibre optique de détection 15 peut comporter une zone de conditionnement 92 disposée entre deux capteurs $C_a$, $C_b$ montés en série de façon à supprimer les modes supérieurs se propageant entre les capteurs. La lumière parvenant au premier capteur $C_a$ est dans un état d'équilibre spectral vis-à-vis des caractéristiques optiques de la fibre 15. Après le passage à travers le premier capteur $C_a$, le spectre de la lumière est perturbé car le capteur $C_a$ produit de modes optiques élevés. Ces modes élevés sont absorbés préférentiellement par la gaine de la fibre 15 mais il peut subsister, à l'entrée du second capteur $C_b$,des modes élevés qui présentent l'inconvénient de modifier la réponse du second capteur $C_b$ par rapport à celle du premier capteur $C_a$ et donc d'altérer le résultat de la mesure.

En aménageant une zone de conditionnement 92 sur la fibre 15 entre les deux capteurs $C_a$, $C_b$, on élimine ces modes élevés, ce qui améliore la fiabilité de la mesure en reproduisant, à l'entrée du second capteur $C_b$ un spectre de lumière correspondant à l'équilibre de propagation dans la fibre optique 15. La zone de conditionnement 92 illustrée aux figures 9 et 10 peut comprendre un tronçon de la fibre 15 entouré par une gaine 93 absorbant les modes élevés ou par un autre milieu dont l'indice de réfraction est adapté pour absorber ces modes élevés ("mode stripper"). En amont de ce tronçon, la zone de conditionnement peut en outre comprendre un mélangeur de modes 94.

Un autre circuit optique selon l'invention permettant de réaliser l'intégration de fractions d'effort mesurées est représenté schématiquement à la figure 11. Ce circuit est monté entre deux sources 304a, 304b et deux détecteurs 306a, 306b de lumière. La première source 304a émet des impulsions lumineuses à une première fréquence de répétition $f_1$ dans une fibre optique $E_1$ qui achemine la lumière vers la zone de mesure 300 où la fibre $E_1$ se raccorde à l'entrée d'un coupleur en Y $D_1$. Aux deux sorties du coupleur en Y $D_1$ se raccordent une première fibre optique de détection 315 et une première fibre optique de référence 360. Deux capteurs $C_1$, $C_2$ sont montés sur des tronçons de sollicitation de la première fibre optique de détection 315 et la première fibre optique de référence 360 passe en dehors des capteurs. La seconde source 304b émet des impulsions lumineuses à une seconde fréquence de répétition $f_2$ dans une fibre optique $E_3$ qui achemine la lumière vers la zone de mesure 300 où la fibre $E_3$ se raccorde à l'entrée d'un coupleur en Y $D_3$. Aux deux sorties du coupleur en Y $D_3$ se raccordent une seconde fibre optique de détection 316 et une seconde fibre optique de référence 361. Deux autres capteurs $C_3$, $C_4$ sont montés sur des tronçons de sollicitation de la seconde fibre optique de détection 316 et la seconde fibre optique de référence 361 passe en dehors des capteurs. Les autres extrémités de la première fibre optique de détection 315 et de la seconde fibre optique de référence 361 se raccordent aux deux entrées d'un coupleur en Y $D_2$. Une fibre optique $E_2$ se raccorde à la sortie du coupleur en Y $D_2$ pour acheminer la lumière transmise par les fibres 315 et 361 hors de la zone de mesure 300 jusqu'au premier photodétecteur 306a. Les autres extrémités de la seconde fibre optique de détection 316 et de la première fibre optique de référence 360 se raccordent aux deux entrées d'un coupleur en Y $D_4$. Une fibre optique $E_4$ se raccorde à la sortie du coupleur en Y $D_4$ pour acheminer la lumière transmise par les fibres 316 et 360 hors de la zone de mesure 300 jusqu'au second photodétecteur 306b.

En choisissant des fréquences d'émission $f_1$, $f_2$ différentes pour les deux sources 304a, 304b, on peut discriminer, dans les signaux reçus par chaque détecteur 306a, 306b, entre la lumière transmise le long des fibres optiques de détection 315, 316 et des fibres optiques de référence 360, 361.

Ainsi, le détecteur 306a permet de déterminer l'atténuation $A_1$ le long du trajet $E_1/D_1/315/D_2/E_2$ et l'atténuation $A_2$ le long du trajet $E_3/D_3/361/D_2/E_2$ et le détecteur 306b permet de déterminer l'atténuation $A_3$ le long du trajet $E_1/D_1/360/D_4/E_4$ et l'atténuation $A_4$ le long du trajet $E_3/D_3/316/D_4/E_4$.

On constate qu'en calculant simplement la différence $A = (A_1 + A_4) - (A_2 + A_3)$, on obtient directement l'atténuation totale par les quatre capteurs $C_1$, $C_2$, $C_3$, $C_4$ lorsque les fibres optiques de détection 315, 316 et de référence 360, 361 ont la même constitution et les mêmes dimensions.

Par conséquent, le montage ci-dessus permet de calculer l'effort total réparti sur les quatre capteurs $C_1$, $C_2$, $C_3$, $C_4$ et d'éliminer l'effet des pertes indésirables dans les fibres optiques d'acheminement $E_1$, $E_2$, $E_3$, $E_4$ et dans les coupleurs $D_1$, $D_2$, $D_3$, $D_4$. Si d'autres connecteurs sont montés sur les fibres d'acheminement $E_1$, $E_2$, $E_3$, $E_4$, ils auront également sur le résultat de la mesure un effet compensé intrinsèquement par le circuit optique.

On notera que le montage illustré à la figure 11 peut être utilisé avec un seul capteur sur chaque fibre optique de détection 315, 316. Dans ce cas, le circuit optique réalise simplement la sommation des fractions d'effort appliquées à deux capteurs.

On va maintenant décrire l'installation de dispositifs de mesure conformes à l'invention dans un pantographe pour motrice ferroviaire.

De façon classique, le pantographe 200 repose, par un socle électriquement isolé 202 sur la toiture 204 de la motrice. Une structure tubulaire déployable relie le socle 202 à un archet 214 portant des bandes de frottement 218, 219 qui, en service, sont appliquées contre la ligne caténaire 201 pour assurer le captage du courant destiné aux organes moteurs de la motrice ferroviaire. La structure tubulaire comprend un bras inférieur 206 articulé sur le socle 202, un bras supérieur 208 articulé sur l'extrémité du bras inférieur 206 et dont l'extrémité supérieure supporte l'archet 214. Des barres complémentaires 210, 212 assurent le maintien en position de la structure tubulaire du pantographe 200, cette structure tubulaire pouvant se déployer sous l'action d'un coussin pneumatique 216 actionné par une unité pneumatique non représentée qui applique une pression déterminée dans le coussin 216 pour exercer un effort de contact réglable entre les bandes de frottement 218, 219 et la ligne caténaire 201.

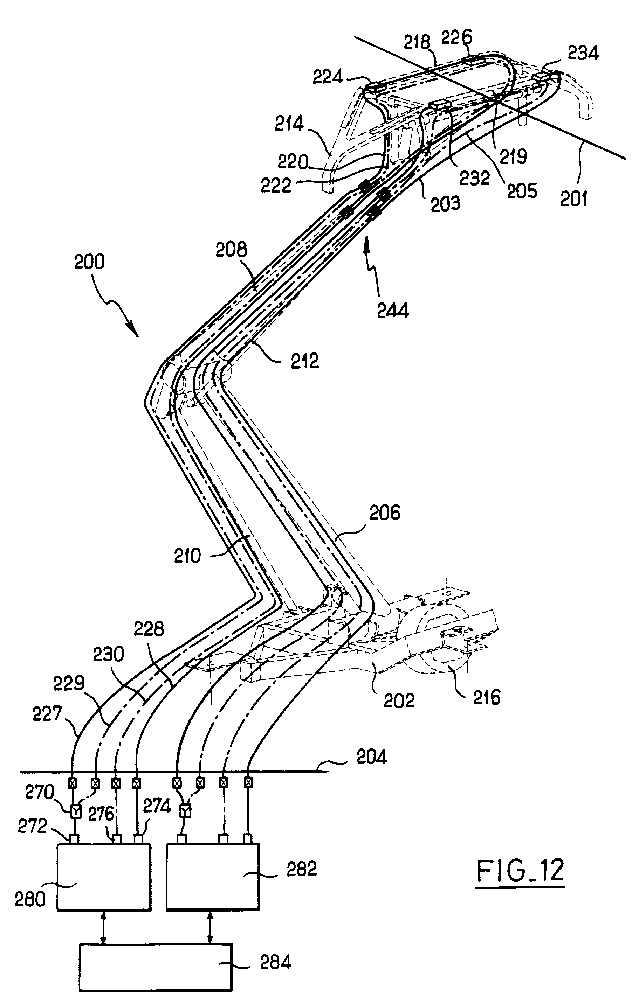

Dans la forme de réalisation représentée à la figure 12, l'archet 214 supporte deux bandes de frottement 218, 219. L'effort de contact s'exerçant entre le fil caténaire 201 et la première bande de frottement 218 est mesuré par un dispositif de mesure conforme à l'invention comprenant une fibre optique de détection 220 et une fibre optique de référence 222 réunies en un câble 221 et deux capteurs 224, 226 montés en série sur la fibre de détection 220 et interposés entre la bande de frottement 218 et la branche 215 de l'archet 214 supportant cette bande de frottement 218. De même, l'effort de contact s'exerçant entre le fil caténaire 201 et la seconde bande de frottement 219 est mesuré par un dispositif de mesure conforme à l'invention comprenant une fibre optique de détection 203 et une fibre optique de référence 205 réunies en un câble 223 et deux capteurs 232, 234 montés en série sur la fibre de détection 203 et interposés entre la bande de frottement 219 et la branche 217 de l'archet 214 supportant cette bande de frottement 219. Pour éviter de surcharger la figure 12, on n'a pas affecté de référence numérique aux différentes fibres optiques utiles à la mesure de la force de contact entre le fil caténaire 201 et la seconde bande de frottement 219 du pantographe 200. On comprendra cependant que ce circuit optique est identique à celui relatif à la bande de frottement 218 qu'on va décrire ci-dessus en détail.

En outre, puisque le dispositif de mesure conforme à l'invention a été décrit en détail en référence aux figures 1 à 11, on va simplement décrire son montage jour l'utilisation préférée dans le pantographe 200 sans qu'il soit nécessaire de détailler de nouveau la structure des capteurs (bras, articulations, support, surfaces de pincement etc...) ou les circuits optiques entre les capteurs.

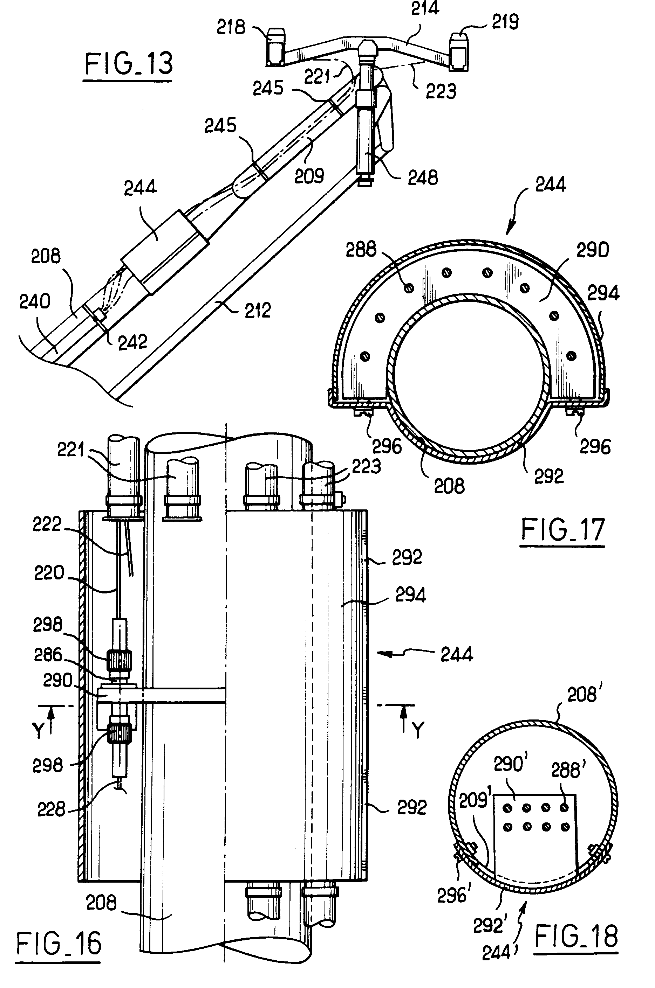

La figure 13 représente, en élévation, la partie haute d'un pantographe qui, conformément à l'invention incorpore des capteurs de mesure d'effort. Un faisceau de fibres optiques 240 est maintenu contre la structure tubulaire du pantographe 200 par des attaches 242. Dans la partie haute du bras supérieur 208 est disposée une unité de connexion optique 244 permettant de relier les fibres optiques comprises dans le faisceau 240 aux fibres optiques de détection 203, 220 et de référence 205, 222 utilisées pour mesurer l'effort de contact entre la ligne caténaire 201 et l'archet 214. Un premier câble 221 comprenant les fibres optiques de détection 220 et de référence 222 relatives à la première bande de frottement 218 est monté à ses deux extrémités sur l'unité de connexion optique 244, et est amené au voisinage de la bande de frottement 218 pour mesurer l'effort que celle-ci supporte. Pour guider le câble 221, on a prévu des attaches 245, 246 portées respectivement par un support d'archet en forme de Y 209 et par l'archet 214 (voir figure 14).

L'archet 214, qui est monté sur son support 209 par l'intermédiaire de boîtes de suspension 248 comprend deux branches parallèles 215, 217 s'étendant sous les bandes de frottement 218, 219 dans une direction transversale à la ligne de courant 201. A la vue de dessus de la figure 14, on a représenté la bande de frottement 219 montée sur sa branche d'archet 217, mais on n'a pas représenté la bande de frottement 218 pour montrer la structure de sa branche d'archet respective 215. Les branches d'archet 215, 217 ont la forme de profilés en U, dont la partie intérieure sert au passage des câbles de fibres optiques 221, 223, fixés à l'intérieur de ces profilés par des attaches 250. Aux deux extrémités de chaque branche 215, 217 sont montés des blocs capteurs, respectivement 224, 226 et 232, 234. Ces capteurs sont placés dans des boîtes 225, 233 portées par les extrémités des branches 215, 217 (voir figures 14 et 15). Pour le montage des bandes de frottement 218, 219 sur leurs branches respectives 215, 217, sont prévus des étriers 252, 254 fixés chacun à une extrémité de la bande 218, 219 et articulés suivant un axe 262, 264 sur le bras du capteur respectif 224, 232. Ainsi, l'effort de contact s'exerçant entre les bandes de frottement 218, 219 et la ligne caténaire 201 est transmis intégralement aux bras des capteurs 224, 226, 232, 234 par l'intermédiaire des étriers d'application de force 252, 254. Comme on l'a décrit en référence aux figures 3 et 4, l'axe d'articulation 262, 264 de l'étrier d'application de force 252, 254 est situé, sur le bras du capteur respectif 224, 232, plus près de l'axe de pivotement dudit bras que du tronçon de sollicitation respectif de la fibre optique de détection compris entre les surfaces de pincement du capteur. Par ailleurs, le capteur 232 est fixé dans son boîtier 233 à la base de son support, en un endroit 265 situé au droit de l'axe de pivotement 264. La surface de pincement solidaire du bras du capteur 232 est reliée à la bande de frottement 219 et la surface de pincement solidaire du support du capteur 232 est reliée à la branche 217 de l'archet 214.

On peut voir aux figures 14 et 15 que les bandes de frottement 219 ont des prolongements latéraux indépendants 259 solidaires de l'archet 214. Ces prolongements latéraux 259 évitent la présence d'un décrochement dans la zone 260 où s'interrompt la bande de frottement 219, qui doit être fixée sur l'archet. 214 uniquement par les étriers d'application de force 254 s'appuyant sur les capteurs 232. Ces zones d'interruption 260 s'étendent obliquement par rapport à la direction des bandes de frottement pour éviter que le fil caténaire 201 puisse s'y coincer (voir figure 14).

Le circuit optique de mesure de l'effort entre les bandes de frottement 218, 219 et la ligne caténaire 201 est illustré aux figures 12, 16 et 17. Les deux extrémités de la fibre optique de détection 220 relatives à la bande de frottement 218 sont reliées, dans l'unité de connexion optique 244, à deux fibres optiques d'acheminement 227, 228 faisant partie du faisceau 240. Les deux extrémités de la fibre optique de référence 222 relative à la bande de frottement 218 sont reliées, dans l'unité de connexion optique 244, à deux autres fibres optiques d'acheminement 229, 230 du faisceau 240. A l'extrémité du faisceau 240 du côté de la motrice, les fibres optiques 227, 229 sont reliées à la sortie d'un coupleur en Y 270 dont l'entrée est reliée à une source de lumière 272, telle qu'une diode laser. Les extrémités des fibres optiques 228, 230 du faisceau 240 sont reliées respectivement à des photodétecteurs 274, 276 qui mesurent les intensités lumineuses reçues. Ainsi, la lumière émise par la diode laser 272 suit une voie de détection formée par la fibre optique 227, la fibre optique de détection 220 et la fibre optique 228 et aboutissant au photodétecteur 274, et une voie de référence formée par la fibre optique 229, la fibre optique de référence 222, et la fibre optique 230, et aboutissant au photodétecteur 276. Une unité de traitement de signal 280 interprète alors l'atténuation lumineuse des signaux reçus par les photodétecteurs 274, 276 et en déduit l'effort subi par la bande de frottement 218 et mesuré par les capteurs 224, 226. Pour faciliter cette interprétation, on prévoit de préférence une constitution et des dimensions identiques pour les fibres optiques 227, 228, 229, 230 contenues dans le faisceau 240 qui assure l'isolement électrique vis-à-vis de la haute tension présente dans le fil caténaire 201, ainsi qu'une constitution et des dimensions identiques pour la fibre optique de détection 220 et la fibre optique de référence 222.

Un circuit optique analogue est prévu pour la mesure de l'effort subi par la bande de frottement 219, cet effort étant déterminé par une seconde unité de traitement de signal 282. La mesure des efforts de contact entre les bandes de frottement 218, 219 et le fil caténaire 201 peut alors être exploitée par un dispositif de commande 284 relié aux unités de traitement de signal 280, 282, par exemple pour commander la pression pneumatique appliquée dans le coussin 216 de façon à régler par asservissement rétroactif la valeur de l'effort de contact entre le pantographe 200 et la ligne caténaire 201. Un tel asservissement est par exemple décrit dans le FR-A-2 646 381 (EP-A-395 504) au nom de la demanderesse.

On notera que l'intégration des fractions d'effort mesurées par le circuit optique rend la mesure de l'effort de contact total sensiblement indépendante de la position du fil caténaire 201 le long des bandes 218, 219, qui définit les points d'application de l'effort de contact sur les bandes 218, 219.

L'unité de connexion optique 244 comporte avantageusement une série de huit connecteurs 286 répartis autour de la périphérie d'une section du bras supérieur 208 de la structure tubulaire du pantographe 200 (voir figures 16 et 17). Chaque connecteur 286 est monté dans un orifice 288 porté par un bloc de connexion 290 monté autour du bras supérieur 208 et maintenu contre le bras supérieur 208 par un boîtier constitué de deux demi-coquilles 292, 294 assemblées par des vis 296. Chaque face du connecteur 286 comprend une bague 298 permettant le montage de l'extrémité de fibre 220, 228 correspondante. L'unité de connexion optique 244 telle que représentée aux figures 11 et 12 a avantageusement un encombrement et un poids réduits, ce qui lui évite de gêner l'aérodynamisme du pantographe 200.

Bien entendu, on comprendra que, dans le cadre de l'invention, d'autres montages des capteurs à fibre optique sur un pantographe sont possibles.

Par exemple, on peut avantageusement faire passer le faisceau de fibres optiques 240 à l'intérieur des tubes constituant le cadre du pantographe. Au niveau des articulations de la structure tubulaire, on peut alors faire passer le faisceau 240 à l'extérieur des tubes pour éviter que les mouvements du pantographe endommagent les fibres optiques. Dans cette variante, l'unité de connexion optique 244' peut avoir la structure illustrée à la figure 18 qui montre une vue en coupe du bras supérieur 208' au droit de l'unité 244'. Le bras 208' présente une ouverture 209' couverte par un capot 292' fixé par des vis 296'. Un bloc de connexion 290' solidaire du capot 292' est disposé à l'intérieur du bras 208' pour supporter les connecteurs 286 montés dans des orifices 288' portés par le bloc de connexion 290'. Au dessus de l'unité de connexion 244', les câbles à fibre optique passent de nouveau à l'extérieur de la structure tubulaire pour rejoindre l'archet 214.

Le dispositif de mesure monté sur le pantographe 200 comme illustré à la figure 12 permet de déterminer séparément la force de contact sur chacune des bandes de frottement 218, 219. Si on souhaite seulement connaître l'effort total entre le fil caténaire 201 et l'archet 214, on peut, dans une version simplifiée, faire passer dans l'archet 214 une fibre optique de détection unique sur laquelle les quatre capteurs 224, 226, 232, 234 seraient montés en série pour réaliser optiquement la sommation des efforts mesurés tout en minimisant le nombre de composants optiques utilisés.

Une autre solution faisant appel à un nombre restreint de fibres optiques consiste à utiliser le montage optique décrit en référence à la figure 11. Dans ce cas, la zone de mesure 300 correspond à l'archet du pantographe et les quatre fibres optiques d'acheminement $E_1$, $E_2$, $E_3$, $E_4$ sont disposées le long de la structure tubulaire 206, 208. Ce montage élimine avantageusement les atténuations parasites dans les fibres optiques d'acheminement.

## Revendications

1. Dispositif pour mesurer une force ($F'_0$) comprenant un circuit optique établi entre plusieurs capteurs de force à fibre optique ($C_a$, $C_b$ ; $C_1$, $C_2$, $C_3$, $C_4$ ; 224, 226, 232, 234), au moins une source de lumière (4 ; 104 ; 272 ; 304a, 304b) et au moins un détecteur de lumière (6a, 6b ; 106a, 106b ; 274, 276 ; 306a, 306b), caractérisé en ce que chaque détecteur de lumière (6a, 6b ; 106a, 106b ; 274, 276 ; 306a, 306b) est disposé pour détecter de la lumière émise par une source de lumière (4 ; 104 ; 272 ; 304a, 304b) et transmise le long du circuit optique, en ce que chacun des capteurs de force ($C_a$, $C_b$ ; $C_1$, $C_2$, $C_3$, $C_4$ ; 224, 226, 232, 234) est sensible à une fraction ($f_a$, $f_b$) de la force à mesurer ($F'_0$) et comporte une zone de transmission d'effort (16, 18 ; 16a, 18a, 16b, 18b ; 116, 118) adaptée pour exercer une contrainte sur un tronçon de sollicitation (17 ; 17a ; 17b ; 117) d'une fibre optique (15 ; 115 ; 203, 220 ; 315, 316) du circuit en réponse à l'application de ladite fraction ($f_a$, $f_b$) de la force à mesurer ($F'_0$) et en ce que le circuit optique est agencé pour que la lumière transmise et détectée fournisse une information représentative de la somme des fractions ($f_a$, $f_b$) de la force à mesurer ($F'_0$) relatives aux capteurs ($C_a$, $C_b$ ; $C_1$, $C_2$, $C_3$, $C_4$ ; 224, 226, 232, 234).

2. Dispositif conforme à la revendication 1, caractérisé en ce que la force à mesurer ($F'_0$) s'exerce sur un organe unique (90 ; 218, 219) en un point d'application indéterminé et en ce que plusieurs capteurs ($C_a$, $C_b$ ; 224, 226, 232, 234) sont reliés à cet organe unique (90 ; 218, 219) pour recevoir chacun une fraction ($f_a$, $f_b$) de la force à mesurer ($F'_0$).

3. Dispositif conforme à la revendication 2, caractérisé en ce que,l'organe unique (90 ; 218, 219) sur lequel s'exerce la force à mesurer ($F'_0$) étant de forme allongée, les capteurs ($C_a$, $C_b$ ; 224, 226, 232, 234) sont reliés à cet organe unique (90 ; 218, 219) au voisinage de ses extrémités.

4. Dispositif conforme à l'une des revendications 1 à 3, caractérisé en ce que chacun des capteurs comporte des moyens de précontrainte (14 ; 186) pour exercer un effort de précontrainte réglable sur son tronçon de sollicitation respectif (17 ; 117) indépendamment de l'application de la force à mesurer ($F'_0$).

5. Dispositif conforme à l'une des revendications 1 à 4, caractérisé en ce chacun des capteurs comporte des moyens de réglage de sensibilité (13).

6. Dispositif conforme à l'une des revendications 1 à 5, caractérisé en ce que le circuit optique comprend au moins une fibre optique de détection (15 ; 203, 220) sur laquelle plusieurs capteurs ($C_a$, $C_b$ ; 224, 226, 232, 234) sont montés en série.

7. Dispositif conforme à la revendication 6, caractérisé en ce que le circuit optique comprend en outre une fibre optique de référence (60 ; 205, 222) ayant sensiblement la même constitution et les mêmes dimensions que la fibre optique de détection (15 ; 203, 220), en ce que la fibre optique de référence (60 ; 205, 222) est reliée à la même source de lumière (4 ; 272) que la fibre optique de détection (15 ; 203, 220) mais à un détecteur de lumière distinct (6b ; 276) et en ce que la fibre optique de référence (60 ; 205, 222) est disposée hors des zones de transmission d'effort (17a, 17b) des capteurs ($C_a$, $C_b$ ; 224, 226, 232, 234) montés sur la fibre optique de détection (15 ; 203, 220).

8. Dispositif conforme à la revendication 7, caractérisé en ce que la fibre optique de détection (15 ; 203, 220) et la fibre optique de référence (60 ; 205, 222) sont réunies dans un câble (62 ; 221, 223) sauf au voisinage de chaque tronçon de sollicitation (17a, 17b) de la fibre optique de détection (15 ; 203, 220), où ledit tronçon de sollicitation (17a, 17b) est disposé dans une zone de transmission d'effort (16a, 18a, 16b, 18b) d'un capteur ($C_a$, $C_b$ ; 224, 226, 232, 234) tandis que la zone correspondante de la fibre optique de référence (60 ; 205, 222) passe en dehors de cette zone de transmission d'effort (16a, 18a, 16b, 18b).

9. Dispositif conforme à l'une des revendications 6 à 8, caractérisé en ce que la fibre optique de détection (15) comporte une zone de conditionnement (92) disposée entre deux capteurs montés en série ($C_a$, $C_b$) sur ladite fibre optique de détection (15).

10. Dispositif conforme à la revendication 9, caractérisé en ce que la zone de conditionnement (92) comprend un tronçon de la fibre optique de détection (15) entouré par un milieu (93) absorbant des modes optiques élevés.

11. Dispositif conforme à la revendication 10, caractérisé en ce que la zone de conditionnement (92) comprend en outre un mélangeur de modes (94) disposé en amont du tronçon entouré par un milieu absorbant (93).

12. Dispositif conforme à l'une des revendications 1 à 11, caractérisé en ce que le circuit optique comprend une premiere et une seconde fibres optiques de détection (315, 316) sur lesquelles sont montés des capteurs de force ($C_1$, $C_2$, $C_3$, $C_4$) et une première et une seconde fibres optiques de référence (360, 361) disposées hors des zones de transmission d'effort des capteurs ($C_1$, $C_2$, $C_3$, $C_4$), les fibres optiques de détection (315, 316) et de référence (360, 361) ayant sensiblement la même constitution et les mêmes dimensions, et en ce que le circuit optique est agencé pour que :
    - la première fibre optique de détection (315) et la première fibre optique de référence (360) reçoivent des impulsions lumineuses émise par une première source de lumière (304a) à une première fréquence ($f_1$) ;
    - la seconde fibre optique de détection (316) et la seconde fibre optique de référence (361) reçoivent des impulsions lumineuses émises par une seconde source de lumière (304b) à une seconde fréquence ($f_2$) distincte de la première fréquence ($f_1$) ;
    - un premier détecteur de lumière (306a) reçoive les impulsions lumineuses transmises par la première fibre optique de détection (315) et par la seconde fibre optique de référence (361) ; et
    - un second détecteur de lumière (306b) reçoive les impulsions lumineuses transmises par la seconde fibre optique de détection (316) et par la première fibre optique de référence (360).

13. Appareillage (200) pour capter le courant électrique d'une ligne caténaire (201) depuis une motrice, comprenant une structure tubulaire déployable (206, 208, 210, 212), un archet (214) disposé à la partie supérieure de la structure tubulaire (206, 208, 210, 212) et supportant au moins une bande de frottement (218,219), des moyens (216) pour appliquer l'archet (214) contre la ligne caténaire (201) caractérisé en ce qu'il comporte au moins un dispositif selon l'une des revendications 1 à 12 dans lequel des capteurs de force à fibre optique (224, 226, 232, 234) sont montés entre une bande de frottement (218, 219) et l'archet (214) de façon à être sensibles chacun à une fraction de la force de contact entre la bande de frottement (218, 219) et la ligne caténaire (201), les capteurs (224, 226, 232, 234) étant reliés à au moins une source de lumière (272) et à au moins un détecteur de lumière (274, 276) par l'intermédiaire d'un circuit optique, chaque détecteur de lumière (274, 276) étant disposé pour détecter de la lumière émise par une source de lumière (272) et transmise le long du circuit optique, et en ce que le circuit optique est agencé pour que la lumière transmise et détectée fournisse une information représentative de la somme des fractions de la forcé de contact relatives aux capteurs (224, 226, 232, 234).

14. Appareillage (200) conforme à la revendication 13, caractérisé en ce que les capteurs (224, 226, 232, 234) sont montés entre la bande de frottement (218, 219) et l'archet (214) de façon que la totalité de la force de contact entre la bande de frottement (218, 219) et la ligne caténaire (201) soit transmise à l'archet (214) par l'intermédiaire desdits capteurs (224, 226, 232, 234).

15. Appareillage conforme à l'une des revendications 13 ou 14, caractérisé en ce que le circuit optique comprend des fibres optiques s'étendant au moins partiellement à l'intérieur de la structure tubulaire.

16. Appareillage conforme à l'une des revendications 13 à 15, caractérisé en ce qu'il comprend une unité de connexion optique (244 ; 244') portée par la structure tubulaire (208 ; 208') au voisinage de l'archet (214) pour le raccordement de fibres optiques (203, 205, 220, 222) s'etendant vers l'archet (214) à des fibres optiques respectives (227, 228, 229, 230) s'étendant le long de la structure tubulaire jusqu'à la motrice.

**Claims**

1. Device for measuring a force ($F'_o$) comprising an optical circuit established between a plurality of optical fibre force sensors ($C_a$, $C_b$ ; $C_1$, $C_2$, $C_3$, $C_4$ ; 224, 226, 232, 234), at least one light source (4; 104; 272 ; 304a, 304b) and at least one light detector (6a, 6b ; 106a, 106b ; 274, 276 ; 306a, 306b), characterized in that each light detector (6a, 6b ; 106a, 106b ; 274, 276 ; 306a, 306b) is disposed so as to detect the light emitted by a light source (4 ; 104 ; 272 ; 304a, 304b) and transmitted along the optical circuit, in that each of the force sensors ($C_a$, $C_b$ ; $C_1$, $C_2$, $C_3$, $C_4$ ; 224, 226, 232, 234) is sensitive to a fraction ($f_a$, $f_b$) of the force for measurement ($F'_o$) and comprises a force transmission zone (16, 18 ; 16a, 18a, 16b, 18b ; 116, 118) adapted to apply a stress to a strain section (17; 17a ; 17b ; 117) of an optical fibre (15 ; 115 ; 203, 220 ; 315, 316) of the circuit in response to the application of said fraction ($f_a$, $f_b$) of the force for measurement ($F'_o$) and in that the optical circuit is arranged so that the light transmitted and detected delivers data represenative of the sum of the fractions ($f_a$, $f_b$) of the force for measurement ($F'_o$) relative to the sensors ($C_a$, $C_b$ ; $C_1$, $C_2$, $C_3$, $C_4$ ; 224, 226, 232, 234).

2. Device according to claim 1, characterized in that the force for measurement ($F'_o$) is applied to a single member (90 ; 218, 219) at an indeterminate point of application and in that a plurality of sensors ($C_a$, $C_b$; 224, 226, 232, 234) are connected to said single member (90 ; 218, 219) in order that each may receive a fraction ($f_a$, $f_b$) of the force for measurement ($F'_o$).

3. Device according to claim 2, characterised in that the single member (90 ; 218, 219) on which the force for measurement ($F'_o$) is exerted is of elongate shape and the sensors ($C_a$, $C_b$; 224, 226, 232, 234) are connected to said single member (90 ; 218, 219) near its ends.

4. Device according to any one of claims 1 to 3, characterized in that each of the sensors comprises prestressing means (14 ; 186) to apply an adjustable prestressing force to its respective strain section (17 ; 117) independently of the application of the force for measurement ($F'_o$).

5. Device according to any one of claims 1 to 4, characterized in that each of the sensors comprises sensitivity adjustment means (13).

6. Device according to any one of claims 1 to 5, characterized in that the optical circuit comprises at least one detection optical fibre (15 ; 203, 220) on which a plurality of sensors ($C_a$, $C_b$; 224, 226, 232, 234) are mounted in series.

7. Device according to claim 6, characterized in that the optical circuit also comprises a reference optical fibre (60 ; 205, 222) having substantially the same constitution and the same dimensions as the detection optical fibre (15 ; 203, 220) in that the reference optical fibre (60 ; 205, 222) is connected to the same light source (4 ; 272) as the detection optical fibre (15 ; 203, 220) but to a separate light detector (6b ; 276) and in that the reference optical fibre (60 ; 205, 222) is disposed outside the force transmission zones (17a, 17b) of the sensors (C$_a$, C$_b$; 224, 226, 232, 234) mounted on the detection optical fibre (15 ; 203, 220).

8. Device according to claim 7, characterized in that the detection optical fibre (15 ; 203, 220) and the reference optical fibre (60 ; 205, 222) are combined in a cable (62 ; 221, 223) except in the vicinity of each strain section (17a, 17b) of the detection optical fibre (15 ; 203, 220) where the said strain section (17a, 17b) is disposed in a force transmission zone (16a, 18a, 16b, 18b) of a sensor ((C$_a$, C$_b$; 224, 226, 232, 234) while the corresponding zone of the reference optical fibre (60 ; 205, 222) passes outside said force transmission zone (16a, 18a, 16b, 18b).

9. Device according to any one of claims 6 to 8, characterized in that detection optical fibre (15) comprises a conditioning zone (92) disposed between two sensors mounted in series (C$_a$, C$_b$) on the said detection optical fibre (15).

10. Device according to claim 9, characterized in that the conditioning zone (92) comprises a section of the detection optical fibre (15) surrounded by a medium (93) absorbing high optical modes.

11. Device according to claim 10, characterized in that the conditioning zone (92) also comprises a mode mixer (94) disposed upstream of the section surrounded by an absorbent medium (93).

12. Device according to any one of claims 1 to 11, characterized in that the optical circuit comprises a first and a second detection optical fibres (315, 316) on which are mounted force sensors (C$_1$, C$_2$, C$_3$, C$_4$) and a first and second reference optical fibres (360, 361) disposed outside the force transmission zones of the sensors (C$_1$, C$_2$, C$_3$, C$_4$), the detection optical fibres (305, 316) and reference fibres (360, 361) having substantially the same constitution and the same dimensions, and in that the optical circuit is so arranged that :
   - the first detection optical fibre (315) and the first reference optical fibre (360) receive light pulses emitted by a first light source (304a) at a first frequency (f$_1$) ;
   - the second detection optical fibre (316) and the second reference optical fibre (361) receive light pulses emitted by a second light source (304b) at a second frequency (f$_2$) different from the first frequency (f$_1$) ;
   - a first light detector (306a) receives the light pulses transmitted by the first detection optical fibre (315) and by the second reference optical fibre (361) ; and
   - a second light detector (306b) receives the light pulses transmitted by the second detection optical fibre (316) and by the first reference optical fibre (360).

13. Apparatus (200) for collecting the electric current of a catenary (201) from a motor coach, comprising an extensible tubular structure (206, 208, 210, 212), a bow (214) disposed at the top part of the tubular structure (206, 208, 210, 212) and supporting at least one friction band (218, 219), means (216) for applying the bow (214) against the catenary (201), characterized in that it comprises at least one device according to claims 1 to 12 wherein optical fibre force sensors (224, 226, 232, 234) are mounted between a friction band (218, 219) and the bow (214) so as to be each sensitive to a fraction of the contact force between the friction band (218, 219) and the catenary (201), the sensors (224, 226, 232, 234) being connected to at least one light source (272) and at least one light detector (274, 276) by means of an optical circuit, each light detector (274, 276) being disposed to detect the light emitted by a light source (272) and transmitted along the optical circuit and in that the optical circuit is so arranged that the transmitted and detected light delivers data representative of the sum of the fractions of the contact force relative to the sensors (224, 226, 232, 234).

14. Apparatus (200) according to claim 13, characterized in that the sensors (224, 226, 232, 234) are mounted between the friction band (218, 219) and the bow (214) so that all the contact force between the friction band (218, 219) and the catenary (201) is transmitted to the bow (214) through the agency of said sensors (224, 226, 232, 234).

15. Apparatus according to claim 13 or 14, characterized in that the optical circuit comprises optical fibres extending at least partially inside the tubular structure.

16. Apparatus according to any one of claims 13 to 15, characterized in that it comprises an optical connection unit (244 ; 244') carried by the tubular structure (208 ; 208') near the bow (214) for the connection of the optical fibres (203, 205, 220, 222) extending towards the bow (214) to respective optical fibres (227, 228, 229, 230) extending along the tubular structure as far as the motor coach.

**Patentansprüche**

1. Einrichtung zum Messen einer Kraft ($F'_0$), mit einem optischen Kreis, der zwischen mehreren Lichtleitfaser-Kraftmeßwertaufnehmern ($C_a$, $C_b$; $C_1$, $C_2$, $C_3$, $C_4$; 224, 226, 232, 234) ausgebildet ist, wenigstens einer Lichtquelle (4; 104; 272; 304a, 304b) und wenigstens einem Lichtdetektor (6a, 6b; 106a, 106b; 274, 276; 306a, 306b), dadurch gekennzeichnet, daß jeder Lichtdetektor (6a, 6b; 106a, 106b; 274, 276; 306a, 306b) zur Erfassung des Lichts angeordnet ist, das von der Lichtquelle (4; 104; 272; 304a, 304b) ausgesendet und entlang dem optischen Kreis übertragen wird, daß jeder der Kraftmeßwertaufnehmer ($C_a$, $C_b$; $C_1$, $C_2$, $C_3$, $C_4$; 224, 226, 232, 234) auf einen Bruchteil ($f_a$, $f_b$) der zu messenden Kraft ($F'_0$) anspricht und eine Belastungsübertragungszone (16, 18; 16a, 18a, 16b, 18b; 116, 118) aufweist, die so beschaffen ist, daß sie bei Anliegen des Bruchteils ($f_a$, $f_b$) der zu messenden Kraft ($F'_0$) auf ein Belastungsteilstück (17; 17a; 17b; 117) einer Lichtleitfaser (15; 115; 203, 220; 315, 316) des Kreises eine Belastung ausübt, und daß der optische Kreis so beschaffen ist, daß das übertragene und erfaßte Licht eine Information liefert, die die Summe der auf die Meßwertaufnehmer ($C_a$, $C_b$; $C_1$, $C_2$, $C_3$, $C_4$; 224, 226, 232, 234) bezogenen Bruchteile ($f_a$, $f_b$) der zu messenden Kraft ($F'_0$) darstellt.

2. Einrichtung gemäß Anspruch 1, dadurch gekennzeichnet, daß die zu messende Kraft ($F'_0$) auf ein einzelnes Element (90; 218, 219) an einem unbestimmten Angriffspunkt ausgeübt wird und daß mit diesem einzelnen Element (90; 218, 219) mehrere Meßwertaufnehmer ($C_a$, $C_b$, 224, 226, 232, 234) verbunden sind, um jeweils einen Bruchteil ($f_a$, $f_b$) der zu messenden Kraft ($F'_0$) aufzunehmen.

3. Einrichtung gemäß Anspruch 2, dadurch gekennzeichnet, daß in dem Fall, in dem das einzelne Element (90; 218, 219) auf das die zu messende Kraft ($F'_0$), ausgeübt wird, von langgestreckter Form ist, die Meßwertaufnehmer ($C_a$, $C_b$; 224, 226, 232, 234) mit diesem einzelnen Element (90; 218, 219) in der Nähe von dessen Enden verbunden sind.

4. Einrichtung gemäß einem der Ansprüche 1 bis 3, dadurch gekennzeichnet, daß die Meßwertaufnehmer Vorbeanspruchungsmittel (14; 186) aufweisen, die auf ihr entsprechendes Belastungsteilstück (17; 117) unabhängig von der Anwendung der zu messenden Kraft ($F'_0$) eine einstellbare Vorbeanspruchung ausüben.

5. Einrichtung gemäß einem der Ansprüche 1 bis 4, dadurch gekennzeichnet, daß jeder der Meßwertaufnehmer Mittel für die Einstellung der Empfindlichkeit (13) aufweist.

6. Einrichtung gemäß einem der Ansprüche 1 bis 5, dadurch gekennzeichnet, daß der optische Kreis wenigstens eine Erfassungs-Lichtleitfaser (15; 203, 220) aufweist, auf der mehrere Meßwertaufnehmer ($C_a$, $C_b$; 224, 226, 232, 234) hintereinander angebracht sind.

7. Einrichtung gemäß Anspruch 6, dadurch gekennzeichnet, daß der optische Kreis außerdem eine Referenz-Lichtleitfaser (60; 205, 222) aufweist, die im wesentlichen den gleichen Aufbau und die gleichen Abmessungen wie die Erfassungs-Lichtleitfaser (15; 203, 220) besitzt, daß die Referenz-Lichtleitfaser (60; 205, 222) mit derselben Lichtquelle (4; 272) wie die Erfassungs-Lichtleitfaser (15; 203, 220), jedoch mit einem unterschiedlichen Lichtdetektor (6b; 276) verbunden ist und daß die Referenz-Lichtleitfaser (60; 205, 222) außerhalb der Kraftübertragungszonen (17a, 17b) der an der Erfassungs-Lichtleitfaser (15; 203, 220) angebrachten Meßwertaufnehmer ($C_a$, $C_b$; 224, 226, 232, 234) angeordnet ist.

8. Einrichtung gemäß Anspruch 7, dadurch gekennzeichnet, daß die Erfassungs-Lichtleitfaser (15; 203, 220) und die Referenz-Lichtleitfaser (60; 205, 222) außer in der Umgebung eines jeden Belastungsteilstücks (17a, 17b) der Erfassungs-Lichtleitfaser (15; 203, 220) in einem Kabel (62; 221, 223) vereinigt sind, wobei in dieser Umgebung das Belastungsteilstück (17a, 17b) in einer Kraftübertragungszone (16a, 18a, 16b, 18b) eines Meßwertaufnehmers ($C_a$, $C_b$; 224, 226, 232, 234) angeordnet ist, während die entsprechende Zone der Referenz-Lichtleitfaser (60; 205, 222) außerhalb dieser Kraftübertragungszone (16a, 18a, 16b, 18b) verläuft.

9. Einrichtung gemäß einem der Ansprüche 6 bis 8, dadurch gekennzeichnet, daß die Erfassungs-Lichtleitfaser (15) eine Konditionierungszone (92) aufweist, die zwischen zwei auf der Erfassungs-Lichtleitfaser (15) hintereinander

angeordneten Meßwertaufnehmern ($C_a$, $C_b$) angeordnet ist.

10. Einrichtung gemäß Anspruch 9, dadurch gekennzeichnet, daß die Konditionierungszone (92) ein Teilstück der Erfassungs-Lichtleitfaser (15) umfaßt, das von einem hohe optische Moden absorbierenden Milieu (93) umgeben ist.

11. Einrichtung gemäß Anspruch 10, dadurch gekennzeichnet, daß die Konditionierungszone (92) außerdem einen Modenmischer (94) aufweist, der stromaufseitig zu dem von einem absorbierenden Milieu (93) umgebenen Teilstück angeordnet ist.

12. Einrichtung gemäß einem der Ansprüche 1 bis 11, dadurch gekennzeichnet, daß der optische Kreis versehen ist mit einer ersten und mit einer zweiten Erfassungs-Lichtleitfaser (315, 316), an denen Kraftmeßwertaufnehmer ($C_1$, $C_2$, $C_3$, $C_4$) angebracht sind, und einer ersten und einer zweiten Referenz-Lichtleitfaser (360, 361), die außerhalb der Kraftübertragungszonen der Meßwertaufnehmer ($C_1$, $C_2$, $C_3$, $C_4$) angeordnet sind, wobei die Erfassungs-Lichtleitfasern (315, 316) und die Referenz-Lichtleitfasern (360, 361) im wesentli- chen den gleichen Aufbau und die gleichen Abmessungen be- sitzen, und daß der optische Kreis so beschaffen ist, daß:
- die erste Erfassungs-Lichtleitfaser (315) und die erste Referenz-Lichtleitfaser (360) Lichtimpulse empfangen, die von einer ersten Lichtquelle (304a) mit einer ersten Frequenz ($f_1$) ausgesendet werden;
- die zweite Erfassungs-Lichtleitfaser (316) und die zweite Referenz-Lichtleitfaser (361) Lichtimpulse empfangen, die von einer zweiten Lichtquelle (304b) mit einer von der ersten Frequenz ($f_1$) verschiedenen zweiten Frequenz ($f_2$) ausgesendet werden;
- ein erster Lichtdetektor (306a) die Lichtimpulse empfängt, die von der ersten Erfassungs-Lichtleitfaser (315) und von der zweiten Referenz-Lichtleitfaser (361) übertragen werden; und
- ein zweiter Lichtdetektor (306b) die Lichtimpulse empfängt, die von der zweiten Erfassungs-Lichtleitfaser (316) und von der ersten Referenz-Lichtleitfaser (360) übertragen werden.

13. Einrichtung (200) zur Erfassung des elektrischen Stroms einer Kettenfahrleitung (201) von einem Triebwagen aus, mit einer ausklappbaren, rohrförmigen Struktur (206, 208, 210, 212), einem Bügel (214), der im oberen Teil der rohrförmigen Struktur (206, 208, 210, 212) angeordnet ist und wenigstens ein Reibungsband (218, 219) trägt, Mitteln (216) zum Anlegen des Bügels (214) an die Kettenfahrleitung (201), dadurch gekennzeichnet, daß sie wenigstens eine Einrichtung gemäß einem der Ansprüche 1 bis 12 enthält, in der die Lichtleitfaser-Kraftmeßwertaufnehmer (224, 226, 232, 234) zwischen einem Reibungsband (218, 219) und dem Bügel (214) angebracht sind, derart, daß sie jeweils auf einen Bruchteil der Kontaktkraft zwischen dem Reibungsband (218, 219) und der Kettenfahrleitung (201) ansprechen, wobei die Meßwertaufnehmer (224, 226, 232, 234) über einen optischen Kreis mit wenigstens einer Lichtquelle (272) und wenigstens einem Lichtdetektor (274, 276) verbunden sind, wobei jeder Lichtdetektor (274, 276) so angeordnet ist, daß er das Licht erfaßt, das von einer Lichtquelle (272) ausgesendet und entlang dem optischen Kreis übertragen wird, und daß der optische Kreis so beschaffen ist, daß das übertragene und erfaßte Licht eine Information liefert, die die Summe der auf die Meßwertaufnehmer (224, 226, 232, 234) bezogenen Bruchteile der Kontaktkraft darstellt.

14. Einrichtung (200) gemäß Anspruch 13, dadurch gekennzeichnet, daß die Meßwertaufnehmer (224, 226, 232, 234) zwischen dem Reibungsband (218, 219) und dem Bügel (214) angebracht sind, derart, daμ die gesamte Kontaktkraft zwischen dem Reibungsband (218, 219) und der Kettenfahrleitung (201) über die genannten Meßwertaufnehmer (224, 226, 232, 234) zum Bügel (214) übertragen wird.

15. Einrichtung gemäß einem der Ansprüche 13 oder 14, dadurch gekennzeichnet, daß der optische Kreis Lichtleitfasern umfaßt, die wenigstens teilweise im Inneren der rohrförmigen Struktur verlaufen.

16. Einrichtung gemäß einem der Ansprüche 13 bis 15, dadurch gekennzeichnet, daß sie eine optische Verbindungseinheit (244; 244') aufweist, die von der rohrförmigen Struktur (208; 208') in der Nähe des Bügels (214) gehalten wird, um die Lichtleitfasern (203, 205, 220, 222), die sich zum Bügel (214) erstrecken, mit entsprechenden Lichtleitfasern (227, 228, 229, 230) zu verbinden, die sich entlang der rohrförmigen Struktur bis zum Triebwagen erstrecken.

FIG_1

FIG_2

FIG_5

FIG_3

EP 0 503 986 B1

FIG.6

FIG.4

FIG.7     FIG.8

EP 0 503 986 B1

FIG. 9

FIG. 10

FIG. 11

EP 0 503 986 B1

FIG_12

FIG_13

FIG_17

FIG_16

FIG_18

FIG_14

FIG_15